# EUROPEAN PATENT APPLICATION

(11) **EP 3 486 153 A1**
(43) Date of publication of application: **22.05.2019**
(21) Application number: 18201481.1
(22) Date of filing: 19.10.2018
(51) Int. Cl.: B62M 6/40, F16H 37/08

(54) **COAXIAL ELECTRICALLY AIDED CONTINUOUSLY VARIABLE TRANSMISSION**

(30) Priority: 21.11.2017 TW 10640268; 03.08.2018 TW 10727169
(71) Applicant: Motive Power Industry Co., Ltd., Dacun Township, Changhua County 515 (TW)
(72) Inventor: CHENG, Hsin-Lin, 515 Changhua County (TW)
(74) Representative: Rapisardi, Mariacristina

(57) **Abstract**

An coaxial electrically aided continuously variable transmission includes an electrical power source; an acceleration planetary gear train connected to the electrical power source; a continuously variable transmission connected to the acceleration planetary gear train; a transmission shaft connected to the electrical power source, acceleration planetary gear train and continuously variable transmission; a manual power source connected to the transmission shaft; a first unidirectional transmission rotating element connected between the transmission shaft and the acceleration planetary gear train; a second unidirectional transmission rotating element connected between the electrical power source and the acceleration planetary gear train, wherein the transmission direction of the first unidirectional transmission rotating element is opposite to the transmission direction of the second unidirectional transmission rotating element. Therefore, coaxial electrically aided continuously variable transmission is compact and transmits power instantly and steadily.

## Description

### FIELD OF THE INVENTION

The present disclosure relates to a coaxial electrically aided continuously variable transmission and, more particularly, to a continuously variable transmission which is compact and transmits power instantly and steadily.

### BACKGROUND OF THE INVENTION

A motor and a gearbox of a conventional electrically aided bicycle are not coaxial; as a result, when put together, the motor and the gearbox are bulky and thus take up space. TWI571576B discloses a linear gearshift power delivery mechanism which essentially comprises a power input rotating element, a ball ring, a power input clamping ring, a plurality of transmission balls, a power output clamping ring, another ball ring and a power output rotating element arranged sequentially. The transmission balls are held by a support rotating element, and their rotation is controlled by a plurality of drive rods. The power input rotating element is resiliently connected to the power input clamping ring by a helical elastomer. The power output rotating element is resiliently connected to the power output clamping ring by another helical elastomer. The power input rotating element of the conventional linear gearshift power delivery mechanism transmits power to the power input clamping ring through the ball ring to enable the power input clamping ring and the power output clamping ring to clamp the transmission balls, allowing the power output rotating element to output power through the other ball ring. However, the power input rotating element of the conventional linear gearshift power delivery mechanism must rotate at a rotation speed greater than a specific rotation speed threshold in order to generate a centrifugal force for stretching the helical elastomer such that the power input clamping ring and the power output clamping ring can clamp the transmission balls well, allowing the power output rotating element to output power. The power input clamping ring and the power output clamping ring cannot clamp the transmission balls well whenever the bicycle starts, climbs, or has its two pedals at the highest and lowest positions, respectively, because the wheels of the bicycle starting, climbing, or having its two pedals at the highest and lowest positions, respectively, are inevitably rotating at the lowest rotation speed and at a rotation speed less than the specific rotation speed threshold. At this point in time, if the cyclist keeps treading on the pedals in the same direction, the power input clamping ring and the power output clamping ring will fail to clamp the transmission balls instantly, and thus power generated from the cyclist's treading on the pedals in the same direction cannot be transmitted to the wheels, thereby resulting in idling; as a result, power transmission is neither instant nor stable. At this point in time, the cyclist may keep treading on the pedals hard enough to attain a rotation speed greater than the specific rotation speed threshold and generate a sufficiently great centrifugal force for stretching the helical elastomer to enable the power input clamping ring and the power output clamping ring to clamp the transmission balls well, and thus power generated from the cyclist's treading on the pedals can be transmitted to the wheels.

Therefore, it is imperative to provide a coaxial electrically aided continuously variable transmission which is compact and transmits power instantly and steadily.

### SUMMARY OF THE INVENTION

In view of the aforesaid drawbacks of the prior art, it is an objective of the present disclosure to provide a coaxial electrically aided continuously variable transmission which is compact and transmits power instantly and steadily.

In order to achieve the above and other objectives, the present disclosure provides a coaxial electrically aided continuously variable transmission, comprising: an electrical power source; an acceleration planetary gear train connected to the electrical power source; a continuously variable transmission connected to the acceleration planetary gear train; a transmission shaft sequentially rotatably connected to the electrical power source, the acceleration planetary gear train and the continuously variable transmission; a manual power source connected to the transmission shaft; a first unidirectional transmission rotating element connected between the transmission shaft and the acceleration planetary gear train to enable the transmission shaft to unidirectionally drive the acceleration planetary gear train; and a second unidirectional transmission rotating element connected between the electrical power source and the acceleration planetary gear train to enable the electrical power source to unidirectionally drive the acceleration planetary gear train, wherein a transmission direction of the first unidirectional transmission rotating element is opposite to a transmission direction of the second unidirectional transmission rotating element.

Regarding the coaxial electrically aided continuously variable transmission, the continuously variable transmission has a support rotating element, a plurality of transmission balls, a plurality of drive rods, a power input clamping rotating element and a power output clamping rotating element, the transmission balls being disposed at a circumference of the support rotating element, spaced apart, and rotatably connected to the drive rods, the power input clamping rotating element having an inward tilt power input clamping annular surface, the power output clamping rotating element having an inward tilt power output clamping annular surface, the transmission balls being movably clamped between the inward tilt power input clamping annular surface, the inward tilt power output clamping annular surface and the support rotating element, the power input clamping rotating element being connected to the acceleration planetary gear train, and the transmission shaft being rotatably connected to the power input clamping rotating element, the support rotating element and the power output clamping rotating element.

Regarding the coaxial electrically aided continuously variable transmission, the acceleration planetary gear train has a sun gear, a plurality of planet gears, a carrier and a ring gear, the planet gears being meshedly disposed between the sun gear and the ring gear and rotatably connected to the carrier, the sun gear being connected to the power input clamping rotating element, the first unidirectional transmission rotating element being connected between the transmission shaft and the carrier, the second unidirectional transmission rotating element being connected between the carrier and the electrical power source, and the transmission shaft being rotatably connected to the sun gear.

The coaxial electrically aided continuously variable transmission further comprises a first deceleration planetary gear train connected between the electrical power source and the second unidirectional transmission rotating element, the transmission shaft being rotatably connected to the first deceleration planetary gear train, and the second unidirectional transmission rotating element being connected between the first deceleration planetary gear train and the carrier to enable the first deceleration planetary gear train to unidirectionally drive the acceleration planetary gear train.

Regarding the coaxial electrically aided continuously variable transmission, the first deceleration planetary gear train has a first sun gear, a plurality of first planet gears, a first carrier and a first ring gear, the first planet gears being meshedly disposed between the first sun gear and the first ring gear and rotatably connected to the first carrier, the first sun gear being connected to the electrical power source, the second unidirectional transmission rotating element being connected between the first carrier and the carrier, and the transmission shaft being rotatably connected to the first sun gear.

The coaxial electrically aided continuously variable transmission further comprises a second deceleration planetary gear train connected between the electrical power source and the first sun gear and having a second sun gear, a plurality of second planet gears, a second carrier and a second ring gear, the second planet gears being meshedly disposed between the second sun gear and the second ring gear and rotatably connected to the second carrier, the second carrier being connected to the first sun gear, the second sun gear being connected to the electrical power source, and the transmission shaft being rotatably connected to the second sun gear and the second carrier.

Regarding the coaxial electrically aided continuously variable transmission, the support rotating element has two support rollers each having an outward tilt support annular surface such that the transmission balls are held by and between the outward tilt support annular surfaces and movably clamped between the inward tilt power input clamping annular surface, the inward tilt power output clamping annular surface and the outward tilt support annular surfaces, with the transmission shaft rotatably connected to the support rollers.

Regarding the coaxial electrically aided continuously variable transmission, the drive rods have inward end portions rotatably connected, in a radial direction of the support rotating element, to the transmission balls, respectively, and have outward end portions exposed from the transmission balls, respectively, and the drive rods rotate from the radial direction of the support rotating element to in front of an axial direction of the support rotating element.

Regarding the coaxial electrically aided continuously variable transmission, the first unidirectional transmission rotating element is a unidirectional ratchet or a unidirectional bearing, and the second unidirectional transmission rotating element is a unidirectional ratchet or a unidirectional bearing.

Therefore, the coaxial electrically aided continuously variable transmission of the present disclosure is compact and transmits power instantly and steadily.

### BRIEF DESCRIPTION OF THE DRAWINGS

FIG. 1 is a schematic view 1 of a coaxial electrically aided continuously variable transmission according to a preferred embodiment of the present disclosure;
FIG. 2 is a schematic view 2 of the coaxial electrically aided continuously variable transmission according to the preferred embodiment of the present disclosure;
FIG. 3 is a schematic view of the coaxial electrically aided continuously variable transmission according to the preferred embodiment of the present disclosure;
FIG. 4 is a cross-sectional view based on FIG. 3, with a casing removed;
FIG. 5 is a schematic front view based on FIG. 4;
FIG. 6 is a schematic view of a first deceleration planetary gear train according to the preferred embodiment of the present disclosure;
FIG. 7 is a schematic view of a first unidirectional transmission rotating element and a second unidirectional transmission rotating element according to the preferred embodiment of the present disclosure; and
FIG. 8 is a schematic view of a second deceleration planetary gear train according to the preferred embodiment of the present disclosure.

### DETAILED DESCRIPTION OF THE PREFERRED EMBODIMENTS

Objectives, features, and advantages of the present disclosure are hereunder illustrated with specific embodiments, depicted with drawings, and described below.

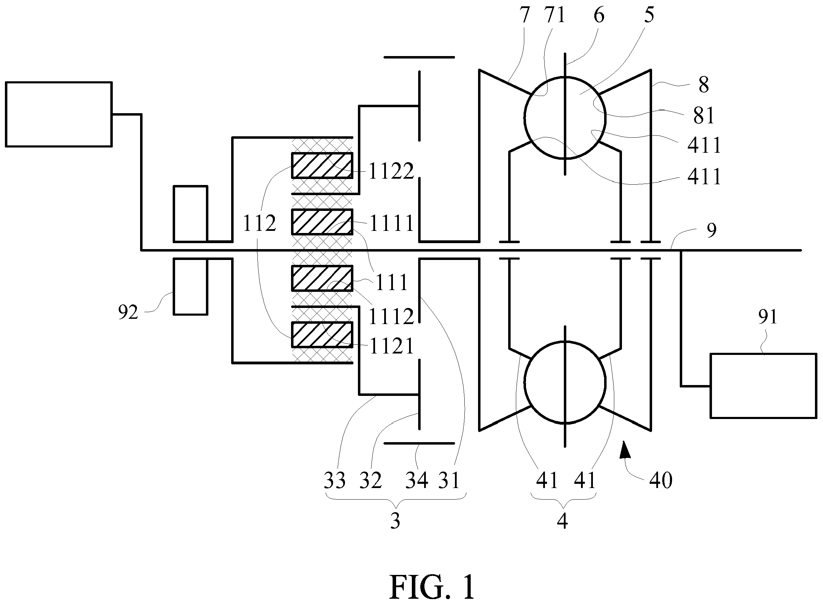

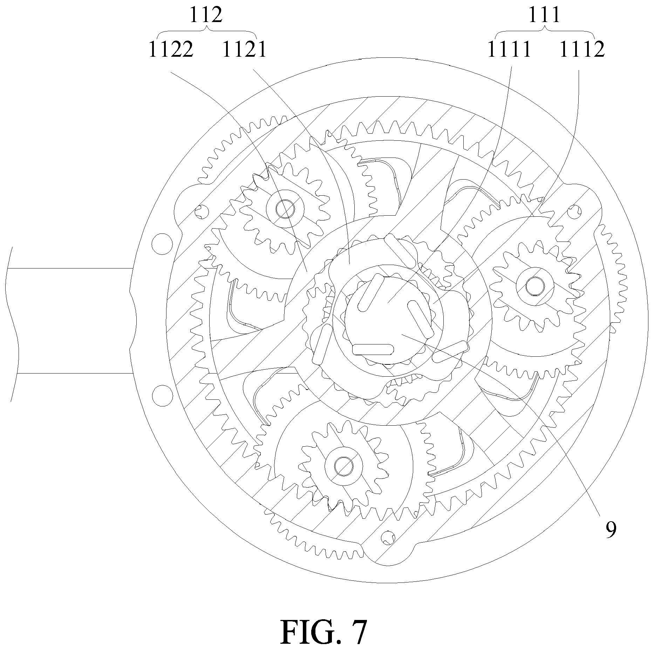

Referring to FIG. 1 and FIG. 7, the present disclosure provides a coaxial electrically aided continuously variable transmission which comprises an electrical power source 92, an acceleration planetary gear train 3, a continuously variable transmission 40, a transmission shaft 9, a manual power source 91, a first unidirectional transmission rotating element 111 and a second unidirectional transmission rotating element 112. The acceleration planetary gear train 3 is connected to the electrical power source 92 (such as a motor capable of low rotation speed and high torque). The continuously variable transmission 40 is connected to the acceleration planetary gear train 3. The transmission shaft 9 is sequentially rotatably connected to the electrical power source 92, the acceleration planetary gear train 3 and the continuously variable transmission 40. The transmission shaft 9, the electrical power source 92 and the continuously variable transmission 40 are slide-connected or bearing-connected. The first unidirectional transmission rotating element 111 is connected between the transmission shaft 9 and the acceleration planetary gear train 3 to enable the transmission shaft 9 to unidirectionally drive the acceleration planetary gear train 3. The second unidirectional transmission rotating element 112 is connected between the electrical power source 92 and the acceleration planetary gear train 3 to enable the electrical power source 92 to unidirectionally drive the acceleration planetary gear train 3. The transmission direction of the first unidirectional transmission rotating element 111 is opposite to the transmission direction of the second unidirectional transmission rotating element 112.

Therefore, the electrical power source 92, acceleration planetary gear train 3, continuously variable transmission 40 and manual power source 91 of the coaxial electrically aided continuously variable transmission of the present disclosure are coaxial along the transmission shaft 9 to take up less space.

Referring to FIG. 1 and FIG. 7, the coaxial electrically aided continuously variable transmission of the present disclosure is advantageous in that the transmission shaft 9 inputs the manual power source 91 or the acceleration planetary gear train 3 inputs the electrical power source 92 (such as a motor capable of low rotation speed and high torque). When the transmission shaft 9 inputs the manual power source 91, the transmission shaft 9 transmits power to the acceleration planetary gear train 3 only through the first unidirectional transmission rotating element 111. Since the transmission direction of the first unidirectional transmission rotating element 111 is opposite to the transmission direction of the second unidirectional transmission rotating element 112, after receiving power from the transmission shaft 9, the acceleration planetary gear train 3 does not transmit power to the electrical power source 92 through the second unidirectional transmission rotating element 112, and then the acceleration planetary gear train 3 transmits power to a power input clamping rotating element 7 of the continuously variable transmission 40 to therefore increase the rotation speed of the power input clamping rotating element 7. When the acceleration planetary gear train 3 inputs the electrical power source 92 (such as a motor capable of low rotation speed and high torque), the electrical power source 92 transmits power to the acceleration planetary gear train 3 only through the second unidirectional transmission rotating element 112, and then the acceleration planetary gear train 3 transmits power to the power input clamping rotating element 7 of the continuously variable transmission 40 to increase the rotation speed of the power input clamping rotating element 7. Since the transmission direction of the first unidirectional transmission rotating element 111 is opposite to the transmission direction of the second unidirectional transmission rotating element 112, after receiving power from the electrical power source 92 through the second unidirectional transmission rotating element 112, the acceleration planetary gear train 3 does not transmit power to the transmission shaft 9 through the first unidirectional transmission rotating element 111. Hence, the coaxial electrically aided continuously variable transmission of the present disclosure is advantageous in that the acceleration planetary gear train 3 increases the rotation speed of the power input clamping rotating element 7 of the continuously variable transmission 40 such that the rotation speed of the power input clamping rotating element 7 catches up with the specific rotation speed threshold quickly to finally exceed it, and thus the power output clamping rotating element 8 and the power input clamping rotating element 7 of the continuously variable transmission 40 clamp a plurality of transmission balls 5 of the continuously variable transmission 40 well. Therefore, the coaxial electrically aided continuously variable transmission of the present disclosure transmits power through the power output clamping rotating element 8 of the continuously variable transmission 40 instantly and steadily.

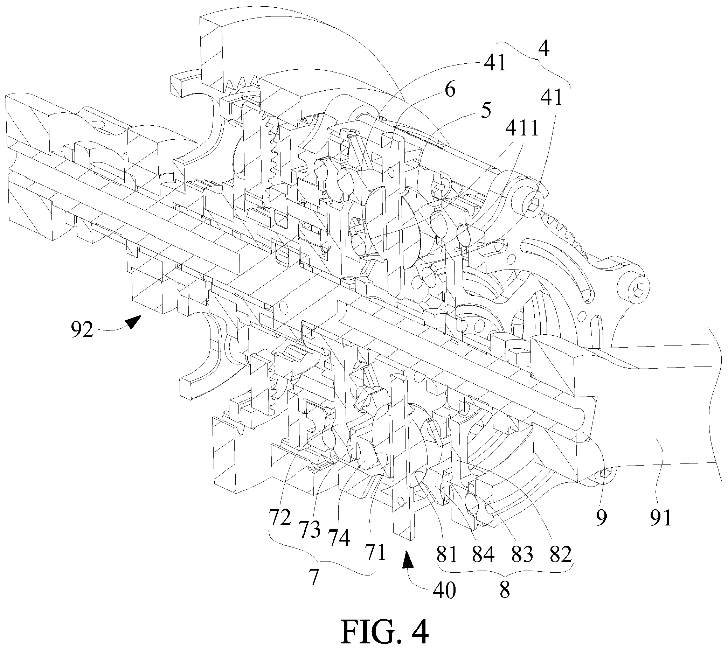

Referring to FIG. 1 and FIG. 3 through FIG. 5, the continuously variable transmission 40 has a support rotating element 4, a plurality of transmission balls 5, a plurality of drive rods 6, a power input clamping rotating element 7 and a power output clamping rotating element 8. The coaxial electrically aided continuously variable transmission of the present disclosure is disposed in a casing 10. The transmission balls 5 are disposed at the circumference of the support rotating element 4 and spaced apart. The transmission balls 5 are rotatably connected to the drive rods 6, respectively. A power input rotating element 72, ball ring 73 and power input clamping ring 74 of the power input clamping rotating element 7 are identical to a conventional power input rotating element, ball ring and power input clamping ring, respectively. The power input clamping rotating element 7 further has an inward tilt power input clamping annular surface 71. Instead of a conventional helical elastomer, a plurality of extensible springs (not shown) may be connected between the power input rotating element 72 and the power input clamping ring 74. A power output rotating element 82, ball ring 83 and power output clamping ring 84 of the power output clamping rotating element 8 are identical to a conventional power output rotating element, ball ring and power output clamping ring, respectively. The power output clamping rotating element 8 further has an inward tilt power output clamping annular surface 81. Instead of a conventional helical elastomer, a plurality of extensible springs (not shown) may be connected between the power output rotating element 82 and the power output clamping ring 84. The transmission balls 5 are movably clamped between the inward tilt power input clamping annular surface 71, the inward tilt power output clamping annular surface 81 and the support rotating element 4. The power input clamping rotating element 7 is connected to the acceleration planetary gear train 3. The transmission shaft 9 is rotatably connected to the power input clamping rotating element 7, the support rotating element 4 and the power output clamping rotating element 8. The transmission shaft 9 is slide-connected or bearing-connected to the power input clamping rotating element 7, the support rotating element 4 and the power output clamping rotating element 8.

Referring to FIG. 1, FIG. 3 and FIG. 5, the acceleration planetary gear train 3 has a sun gear 31, a plurality of planet gears 32, a carrier 33 and a ring gear 34. The planet gears 32 are meshedly disposed between the sun gear 31 and the ring gear 34 and rotatably connected to the carrier 33. The sun gear 31 is connected to the power input clamping rotating element 7. The first unidirectional transmission rotating element 111 is connected between the transmission shaft 9 and the carrier 33. The second unidirectional transmission rotating element 112 is connected between the carrier 33 and the electrical power source 92. The transmission shaft 9 is rotatably connected to the sun gear 31. The transmission shaft 9 and the sun gear 31 are slide-connected or bearing-connected. The ring gear 34 is fixed in place inside the casing 10. The tooth numbers of the planet gears 32, the sun gear 31 and the ring gear 34 of the acceleration planetary gear train 3 are adjusted such that the power input clamping rotating element 7 and the sun gear 31 rotate faster than the carrier 33, thereby increasing the rotation speed of the manual power source 91 (or the electrical power source 92), such as power generated from pedals being trodden (such as power generated from a motor capable of low rotation speed and high torque.)

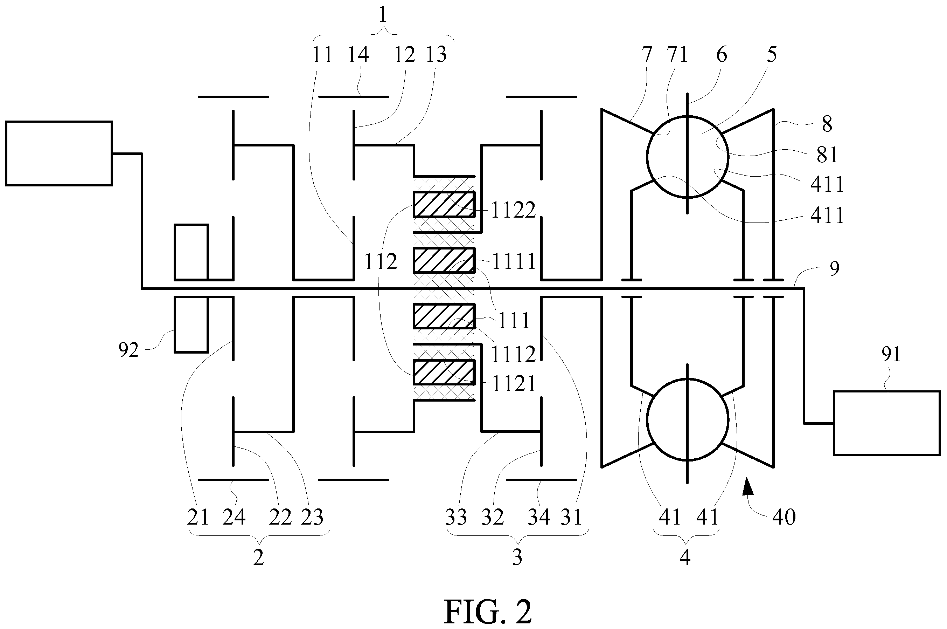

Referring to FIG. 2, the coaxial electrically aided continuously variable transmission further comprises a first deceleration planetary gear train 1 connected between the electrical power source 92 and the second unidirectional transmission rotating element 112. The transmission shaft 9 is rotatably connected to the first deceleration planetary gear train 1. The second unidirectional transmission rotating element 112 is connected between the first deceleration planetary gear train 1 and the carrier 33 to enable the first deceleration planetary gear train 1 to unidirectionally drive the acceleration planetary gear train 3. When the electrical power source 92 is a motor capable of high rotation speed and high torque, the first deceleration planetary gear train 1 reduces the rotation speed of the electrical power source 92.

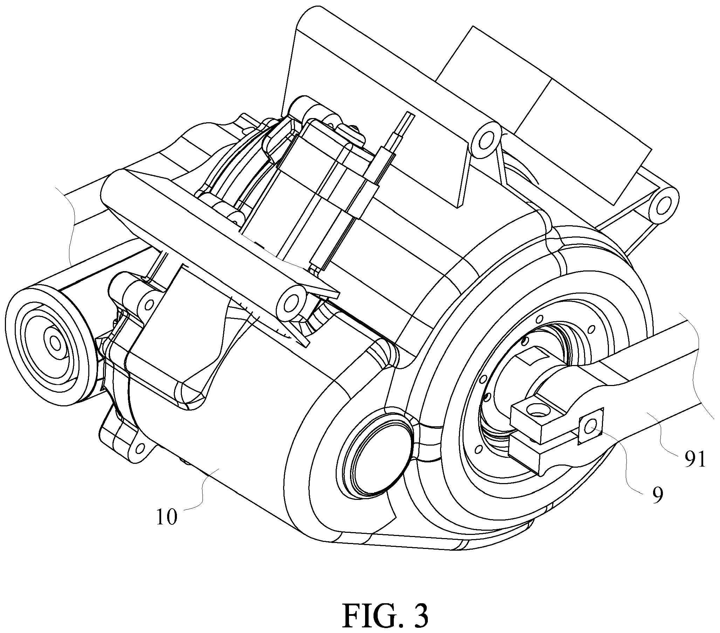

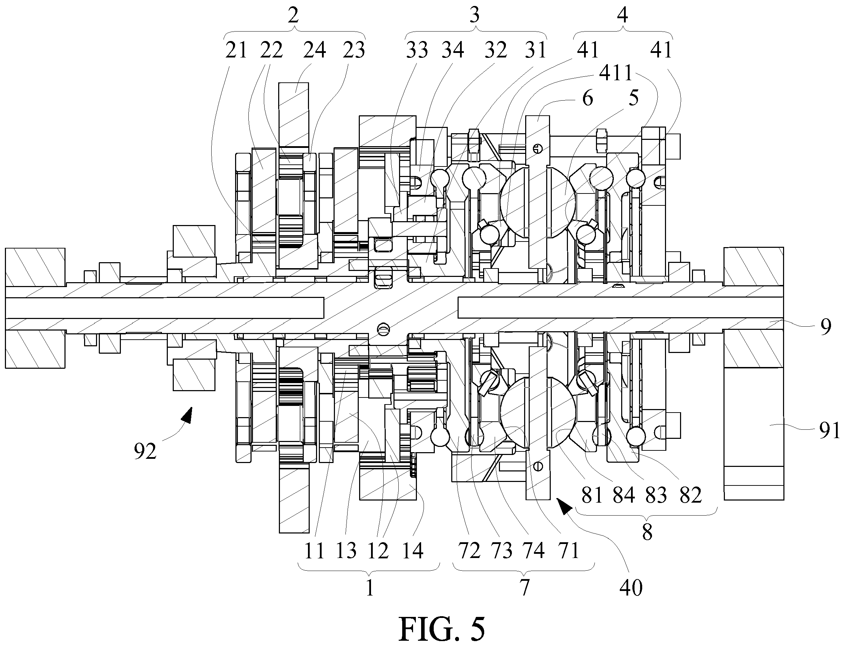

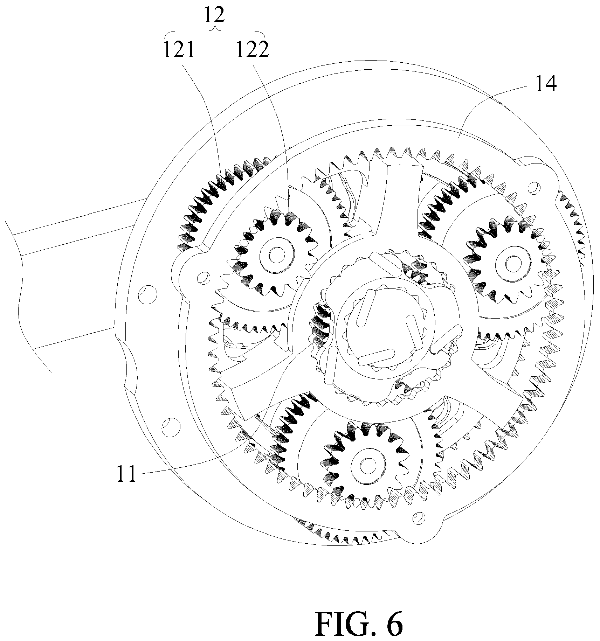

Referring to FIG. 2 and FIG. 3, the first deceleration planetary gear train 1 has a first sun gear 11, a plurality of first planet gears 12, a first carrier 13 and a first ring gear 14. The first sun gear 11 is connected to the electrical power source 92, such as power generated from a motor capable of high rotation speed and high torque. The first planet gears 12 are meshedly disposed between the first sun gear 11 and the first ring gear 14 and rotatably connected to the first carrier 13. The second unidirectional transmission rotating element 112 is connected between the first carrier 13 and the carrier 33. The transmission shaft 9 is rotatably connected to the first sun gear 11. The transmission shaft 9 and the first sun gear 11 are slide-connected or bearing-connected. The first ring gear 14 is fixed in place inside the casing 10. The tooth numbers of the first planet gears 12, the first sun gear 11 and the first ring gear 14 of the first deceleration planetary gear train 1 are adjusted such that the carrier 33 and the first carrier 13 rotate slower than the first sun gear 11, thereby reducing the rotation speed of the electrical power source 92 (such as a motor capable of high rotation speed and high torque). Referring to FIG. 5 and FIG. 6 (unlike FIG. 2 which shows that the first planet gears 12 are each a simple gear), the first planet gears 12 each have a first major planet gear 121 and a first minor planet gear 122 connected to the first major planet gear 121. The first major planet gears 121 mesh with the first sun gear 11. The first minor planet gears 122 mesh with the first ring gear 14.

Referring to FIG. 2 through FIG. 5, the transmission shaft 9 is connected to the manual power source 91, whereas two ends of the transmission shaft 9 penetrate and protrude from the casing 10 to connect to two cranks of the bicycle. The transmission shaft 9 is rotatably connected to the first sun gear 11, the carrier 33, the sun gear 31, the power input clamping rotating element 7, the support rotating element 4 and the power output clamping rotating element 8. The transmission shaft 9 is slide-connected or bearing-connected to the first sun gear 11, the sun gear 31, the power input clamping rotating element 7, the support rotating element 4 and the power output clamping rotating element 8. Referring to FIG. 2, the first unidirectional transmission rotating element 111 is connected between the transmission shaft 9 and the carrier 33 to enable the transmission shaft 9 to unidirectionally drive the carrier 33. The first unidirectional transmission rotating element 111 is a unidirectional ratchet (or unidirectional bearing.) The first inner rotating element 1111 of the first unidirectional transmission rotating element 111 is connected to the transmission shaft 9. A first outer rotating element 1112 of the first unidirectional transmission rotating element 111 is connected to the carrier 33. The second unidirectional transmission rotating element 112 is connected between the carrier 33 and the first carrier 13 to enable the first carrier 13 to unidirectionally drive the carrier 33. The second unidirectional transmission rotating element 112 is a unidirectional ratchet (or unidirectional bearing.) The second inner rotating element 1121 of the second unidirectional transmission rotating element 112 is connected to the carrier 33. A second outer rotating element 1122 of the second unidirectional transmission rotating element 112 is connected to the first carrier 13. The transmission direction of the first unidirectional transmission rotating element 111 is opposite to the transmission direction of the second unidirectional transmission rotating element 112; hence, the transmission direction in which the first inner rotating element 1111 of the first unidirectional transmission rotating element 111 drives the first outer rotating element 1112 is opposite to the transmission direction in which the second inner rotating element 1121 of the second unidirectional transmission rotating element 112 drives the second outer rotating element 1122. Alternatively, the transmission direction in which the first outer rotating element 1112 of the first unidirectional transmission rotating element 111 drives the first inner rotating element 1111 is opposite to the transmission direction in which the second outer rotating element 1122 of the second unidirectional transmission rotating element 112 drives the second inner rotating element 1121. Referring to FIG. 7, in addition to the way of connection of the first unidirectional transmission rotating element 111 and the second unidirectional transmission rotating element 112 shown in FIG. 2, the first inner rotating element 1111 of the first unidirectional transmission rotating element 111 and the transmission shaft 9 are integrally formed, whereas the first outer rotating element 1112 of the first unidirectional transmission rotating element 111, the second inner rotating element 1121 of the second unidirectional transmission rotating element 112 and the carrier (not shown) are integrally formed, wherein the second outer rotating element 1122 of the second unidirectional transmission rotating element 112 and the first carrier (not shown) are integrally formed.

Regarding the coaxial electrically aided continuously variable transmission of the present disclosure, the transmission shaft 9 inputs the manual power source 91 or the first sun gear 11 inputs the electrical power source 92 (such as a motor capable of high rotation speed and high torque). Referring to FIG. 2, FIG. 4, FIG. 5 and FIG. 7, when the transmission shaft 9 inputs the manual power source 91, the transmission shaft 9 transmits power to the carrier 33 of the acceleration planetary gear train 3 only through the first unidirectional transmission rotating element 111. Afterward, the carrier 33 transmits power to the planet gears 32, the sun gear 31 and the power input clamping rotating element 7 to increase the rotation speed of the power input clamping rotating element 7. Since the transmission direction of the first unidirectional transmission rotating element 111 is opposite to the transmission direction of the second unidirectional transmission rotating element 112, power is transmitted to the first carrier 13 not through the second unidirectional transmission rotating element 112 whenever the transmission shaft 9 transmits power to the carrier 33. When the first sun gear 11 of the first deceleration planetary gear train 1 inputs the electrical power source 92 (such as a motor capable of high rotation speed and high torque), the first sun gear 11 transmits power to the carrier 33 of the acceleration planetary gear train 3 only through the first planet gears 12, the first carrier 13 and the second unidirectional transmission rotating element 112 so as to reduce the rotation speed of the electrical power source 92. Afterward, the carrier 33 transmits power to the planet gears 32, the sun gear 31 and the power input clamping rotating element 7, so as to increase the rotation speed of the power input clamping rotating element 7. Since the transmission direction of the first unidirectional transmission rotating element 111 is opposite to the transmission direction of the second unidirectional transmission rotating element 112, the carrier 33 transmits power to the transmission shaft 9 not through the first unidirectional transmission rotating element 111 when the first sun gear 11 transmits power to the carrier 33 through the first planet gears 12, the first carrier 13 and the second unidirectional transmission rotating element 112.

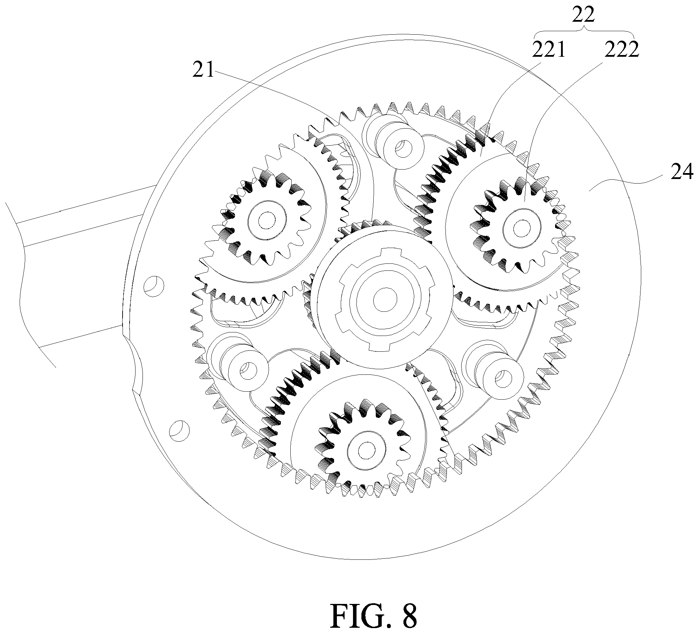

Referring to FIG. 2 and FIG. 3, the coaxial electrically aided continuously variable transmission further comprises a second deceleration planetary gear train 2 disposed between the electrical power source 92 and the first sun gear 11. The second deceleration planetary gear train 2 has a second sun gear 21, a plurality of second planet gears 22, a second carrier 23 and a second ring gear 24. The second planet gears 22 are meshedly disposed between the second sun gear 21 and the second ring gear 24 and are rotatably connected to the second carrier 23. The second carrier 23 is connected to the first sun gear 11. The electrical power source 92 (such as a motor capable of high rotation speed and high torque) is connected to the second sun gear 21. The transmission shaft 9 is rotatably connected to the second sun gear 21 and the second carrier 23. The second ring gear 24 is fixed in place inside the casing 10. The tooth numbers of the second planet gears 22, the second sun gear 21 and the second ring gear 24 of the second deceleration planetary gear train 2 are adjusted such that the second carrier 23 and the first sun gear 11 rotate slower than the second sun gear 21, thereby reducing the rotation speed of the electrical power source 92. The transmission shaft 9 is rotatably connected to the second sun gear 21, the second carrier 23, the first sun gear 11, the carrier 33, the sun gear 31, the power input clamping rotating element 7, the support rotating element 4 and the power output clamping rotating element 8. The transmission shaft 9 is slide-connected or bearing-connected to the second sun gear 21, the second carrier 23, the first sun gear 11, the sun gear 31, the power input clamping rotating element 7, the support rotating element 4 and the power output clamping rotating element 8. Referring to FIG. 5 and FIG. 8 (unlike FIG. 2 which shows that the second planet gears 22 are each a simple gear), the second planet gears 22 each have a second major planet gear 221 and a second minor planet gear 222 connected to the second major planet gear 221. The second major planet gears 221 mesh with the second sun gear 21. The second minor planet gears 222 mesh with the second ring gear 24.

Referring to FIG. 1, FIG. 4 and FIG. 5, regarding the coaxial electrically aided continuously variable transmission, the support rotating element 4 has two support rollers 41. The support rollers 41 each have an outward tilt support annular surface 411. The transmission balls 5 are held by and between the outward tilt support annular surfaces 411 and movably clamped between the inward tilt power input clamping annular surface 71, the inward tilt power output clamping annular surface 81 and the outward tilt support annular surfaces 411. The transmission shaft 9 is rotatably connected to the support rollers 41. The transmission shaft 9 is slide-connected or bearing-connected to the support rollers 41. The transmission balls 5 are firmly disposed between the power input clamping rotating element 7, the power output clamping rotating element 8 and the support rotating element 4.

Referring to FIG. 1, FIG. 4 and FIG. 5, regarding the coaxial electrically aided continuously variable transmission, inward end portions of the drive rods 6 are rotatably connected in the radial direction of the support rotating element 4 to the transmission balls 5 and are exposed from the transmission balls 5 or are not exposed from the transmission balls 5, whereas outward end portions of the drive rods 6 are exposed from the transmission balls 5 to control the rotation of the drive rods 6. The drive rods 6 rotate from the radial direction of the support rotating element 4 to in front of the axial direction of the support rotating element 4. Therefore, the coaxial electrically aided continuously variable transmission of the present disclosure has a large range of speed variations.

The present disclosure is disclosed above by preferred embodiments. However, persons skilled in the art should understand that the preferred embodiments are illustrative of the present disclosure only, but shall not be interpreted as restrictive of the scope of the present disclosure. Hence, all equivalent modifications and replacements made to the aforesaid embodiments shall fall within the scope of the present disclosure. Accordingly, the legal protection for the present disclosure shall be defined by the appended claims.

## Claims

1. A coaxial electrically aided continuously variable transmission, comprising:
an electrical power source (92);
an acceleration planetary gear train (3) connected to the electrical power source (92);
a continuously variable transmission (40) connected to the acceleration planetary gear train (3);
a transmission shaft (9) sequentially rotatably connected to the electrical power source (92), the acceleration planetary gear train (3) and the continuously variable transmission (40);
a manual power source (91) connected to the transmission shaft (9);
a first unidirectional transmission rotating element (111) connected between the transmission shaft (9) and the acceleration planetary gear train (3) to enable the transmission shaft (9) to unidirectionally drive the acceleration planetary gear train (3); and
a second unidirectional transmission rotating element (112) connected between the electrical power source (92) and the acceleration planetary gear train (3) to enable the electrical power source (92) to unidirectionally drive the acceleration planetary gear train (3), wherein a transmission direction of the first unidirectional transmission rotating element (111) is opposite to a transmission direction of the second unidirectional transmission rotating element (112).

2. The coaxial electrically aided continuously variable transmission of claim 1, wherein the continuously variable transmission (40) has a support rotating element (4), a plurality of transmission balls (5), a plurality of drive rods (6), a power input clamping rotating element (7) and a power output clamping rotating element (8), the transmission balls (5) being disposed at a circumference of the support rotating element (4), spaced apart, and rotatably connected to the drive rods (6), the power input clamping rotating element (7) having an inward tilt power input clamping annular surface (71), the power output clamping rotating element (8) having an inward tilt power output clamping annular surface (81), the transmission balls (5) being movably clamped between the inward tilt power input clamping annular surface (71), the inward tilt power output clamping annular surface (81) and the support rotating element (4), the power input clamping rotating element (7) being connected to the acceleration planetary gear train (3), and the transmission shaft (9) being rotatably connected to the power input clamping rotating element (7), the support rotating element (4) and the power output clamping rotating element (8).

3. The coaxial electrically aided continuously variable transmission of claim 2, wherein the acceleration planetary gear train (3) has a sun gear (31), a plurality of planet gears (32), a carrier (33) and a ring gear (34), the planet gears (32) being meshedly disposed between the sun gear (31) and the ring gear (34) and rotatably connected to the carrier (33), the sun gear (31) being connected to the power input clamping rotating element (7), the first unidirectional transmission rotating element (111) being connected between the transmission shaft (9) and the carrier (33), the second unidirectional transmission rotating element (112) being connected between the carrier (33) and the electrical power source (92), and the transmission shaft (9) being rotatably connected to the sun gear (31).

4. The coaxial electrically aided continuously variable transmission of claim 3, further comprising a first deceleration planetary gear train (1) connected between the electrical power source (92) and the second unidirectional transmission rotating element (112), the transmission shaft (9) being rotatably connected to the first deceleration planetary gear train (1), and the second unidirectional transmission rotating element (112) being connected between the first deceleration planetary gear train (1) and the carrier (33) to enable the first deceleration planetary gear train (1) to unidirectionally drive the acceleration planetary gear train (3).

5. The coaxial electrically aided continuously variable transmission of claim 4, wherein the first deceleration planetary gear train (1) has a first sun gear (11), a plurality of first planet gears (12), a first carrier (13) and a first ring gear (14), the first planet gears (12) being meshedly disposed between the first sun gear (11) and the first ring gear (14) and rotatably connected to the first carrier (13), the first sun gear (11) being connected to the electrical power source (92), the second unidirectional transmission rotating element (112) being connected between the first carrier (13) and the carrier (33), and the transmission shaft (9) being rotatably connected to the first sun gear (11).

6. The coaxial electrically aided continuously variable transmission of claim 5, further comprising a second deceleration planetary gear train (2) connected between the electrical power source (92) and the first sun gear (11) and having a second sun gear (21), a plurality of second planet gears (22), a second carrier (23) and a second ring gear (24), the second planet gears (22) being meshedly disposed between the second sun gear (21) and the second ring gear (24) and rotatably connected to the second carrier (23), the second carrier (23) being connected to the first sun gear (11), the second sun gear (21) being connected to the electrical power source (92), and the transmission shaft (9) being rotatably connected to the second sun gear (21) and the second carrier (23).

7. The coaxial electrically aided continuously variable transmission of claim 2, wherein the support rotating element (4) has two support rollers (41) each having an outward tilt support annular surface (411) such that the transmission balls (5) are held by and between the outward tilt support annular surfaces (411) and movably clamped between the inward tilt power input clamping annular surface (71), the inward tilt power output clamping annular surface (81) and the outward tilt support annular surfaces (411), with the transmission shaft (9) rotatably connected to the support rollers (41).

8. The coaxial electrically aided continuously variable transmission of claim 2, wherein the drive rods (6) have inward end portions rotatably connected, in a radial direction of the support rotating element (4), to the transmission balls (5), respectively, and have outward end portions exposed from the transmission balls (5), respectively, and the drive rods (6) rotate from the radial direction of the support rotating element (4) to in front of an axial direction of the support rotating element (4).

9. The coaxial electrically aided continuously variable transmission of claim 1, wherein the first unidirectional transmission rotating element (111) is a unidirectional ratchet or a unidirectional bearing, and the second unidirectional transmission rotating element (112) is a unidirectional ratchet or a unidirectional bearing.
